Europäisches Patentamt

(19) European Patent Office

Office européen des brevets

(11) Publication number: **0 042 931**
**B1**

(12) **EUROPEAN PATENT SPECIFICATION**

(45) Date of publication of patent specification: **18.07.84**

(21) Application number: **81103167.3**

(22) Date of filing: **28.04.81**

(51) Int. Cl.³: **G 11 B 5/58,** G 11 B 27/00, G 11 B 21/10

(54) **Magnetic disk initialization method.**

(30) Priority: **30.06.80 US 164727**

(43) Date of publication of application:
**06.01.82 Bulletin 82/1**

(45) Publication of the grant of the patent:
**18.07.84 Bulletin 84/29**

(84) Designated Contracting States:
**DE FR GB IT**

(56) References cited:

**Patents Abstracts of Japan Vol. 41, No. 18, 13
February 1980 page 75E171
Patents Abstracts of Japan Vol. 2, NO. 108, 8
September 1978 page 5816E78
Patents Abstracts of Japan Vol. 4, No. 18, 13
February 1980 page 75E171**

(73) Proprietor: **International Business Machines
Corporation
Old Orchard Road
Armonk, N.Y. 10504 (US)**

(72) Inventor: **Baxter, Duane Willard
503 8th Avenue SW
Rochester Minnesota 55901 (US)**
Inventor: **Evjen, Joseph Lewis, Jr.
1810 34th Street NW
Rochester Minnesota 55901 (US)**
Inventor: **Hoveland, William Charles
932 28th Street NW
Rochester Minnesota 55901 (US)**
Inventor: **Roble, Roy Arnold
Route 2, Box 289
Byron Minnesota 55920 (US)**
Inventor: **Smith, Donald Raymond
2115 20th Avenue NW
Rochester Minnesota 55901 (US)**
Inventor: **Wirz, John Henry
Route 1
Pine Island Minnesota 55963 (US)**

(74) Representative: **Petersen, Richard Courtenay et al,
IBM United Kingdom Patent Operations Hursley
Park
Winchester Hants. SO21 2JN (GB)**

## Description

This invention relates to a method of initializing sector servo information on the disks of a magnetic disk storage assembly having product transducer heads positionable by an actuator.

Magnetic disk drive sector servo systems are set up with the servo sector tracks offset from the data sector tracks by a half track spacing such that the device read/write head is centered on a data track by alignment with the interface between sector servo track portions. Because the sector servo information is used at the margins of the written tracks it is imperative that the servo data be written to the full track width, whereas data tracks use only about 80 per cent of the intertrack spacing and are accordingly narrower than the track pitch.

There are two common methods of initializing the disks with sector servo information. The product transducer heads, or heads narrower than the intertrack pitch, may be used by making two recording passes over each sector to be recorded. This requires precise alignment of the corresponding pulses which can never be wholly achieved and is often less than acceptable.

The other method is to use a special servo writer head and actuator, which is especially designed to write the full width of the intertrack pitch in a single pass. This is a precision device that can be accurately positioned and aligned. The limitation with the use of this device is that the product heads and actuator are normally not such a precision device and cannot be made so without undue expense and effort. The product head assembly does not have heads in perfect alignment along axes parallel to the axis of rotation of the disks. In addition the linear motion of the assembly while moving track to track is not likely to be exactly radial or precisely aligned with any other path selected for access. The result is the tracks that should be vertically aligned between surfaces are not, nor are the circumferential positions of the various heads aligned. Both these conditions require resynchronizing when switching between tracks even when supposedly aligned parallel to the axis of rotation.

It is important to have all data read/write transducer heads aligned properly and simultaneously with the corresponding tracks, so that these form a cylinder of data tracks. In use it is the practice to record information, whenever possible on the same track or on tracks of the same cylinder that can be accessed by switching heads, rather than on tracks that require an actuator access. This obviously enhances the data rate of either reading or writing because an actuator assembly access movement is not required. Studies have shown that in practice, 60% of data accesses are made without moving or accessing the transducer assembly. Accordingly, it is important to have each disk drive transducer head correctly positioned over a track of a cylinder, so that electrically switching between heads does not also require an access to position the newly addressed head correctly.

According to the invention, a method of initializing sector servo information comprises using the product transducer heads to write first and second non-adjacent tracks on the surfaces of the disks, measuring the radial position and circumferential timing of the impulses written relative to the position and timing of corresponding servo-writer transducer heads of a precision servo track writer device, positioned over the first and second data track, determining deviations between expected and actual positions for each product transducer head and storing these values in a memory, using these stored values for determining the radial position and circumferential timing for each pattern of servo information trace to be written, successively writing the initializing sector servo information on the disks to form equally spaced tracks starting by radially offsetting the corresponding servo writer transducer head by half a track pitch, and circumferentially adjusting the write start timing, whereby the placement of the servo information is adjusted to the position and path of travel of the associated product transducer head.

In a preferred method according to the present invention, the disks of the assembly are initialized for sector servo operating mode by first recording a clock track on one surface on a disk at a position radially in ward of the surface of the disk accessible by the product heads. The product heads are the read/write transducer assemblies which are dedicated to and form a permanent part of the disk drive. This is done by using a clock head and a pair of speed heads. The clock head applies bit pulses to the clock track with a density normally in excess of a thousand pulses per degree of rotation with a closing accuracy in the range of 10 nanoseconds. To attain this accuracy the rate of disk rotation is established with precision by the speed heads which are aligned with the same track on a write and thereafter read until the time between writing and reading indicates that the exact rotational speed has been achieved. When the clock track has been written and an index position established, all subsequent timings and positions during initialization are derived from the train of clock pulses read from the clock track.

The product heads are now used to write a track at the inner crash stop and at the outer crash stop on each disk using each product head. The servo writer head now accesses each disk surface and determines the positions and timing characteristics of the impulses written on the tracks by each product head. The circumferential positions of the tracks are determined using a laser interferometer and the circumferential offset is determined by using a count to quantify the circumferential displacement from a true vertical radial alignment of the transducer gaps. The information thus obtained is recorded. The position of the tracks is justified and the circumferential offset is adjusted to establish track positions and sector starting locations and using this informatio, the sector data is written at each track location displaced by one-half track so that the interface between servo tracks establishes the data track centreline in the normal manner. The product heads will now function during reading or writing as if precisely aligned along an access parallel to the axis of rotation of the disks.

This compensation allows switching between product heads without resynchronization or drastic track repositioning of each head. By using this method of tailoring the servo patterns on the disk surfaces to the product actuator and head assembly, the necessity for adherence to a precise alignment standard is eliminated and less exacting tolerances may be used during actuator manufacture. Head alignment is accomplished by track placement and by measuring the timing characteristics of the selected tracks, shifting the encoded servo data to accommodate the individual machine for greater head-to-track registration accuracy. This results in enhanced product performance at lower cost.

The invention seeks to provide a disk assembly sector servo initialization method in which the sector servo information applied to the disk surfaces causes all dedicated transducer heads to be simultaneously aligned with the corresponding track, whereby switching between transducer heads at the same track location requires no movement or seeking by the transducer subassembly.

The scope of the invention is defined by the appended claims; and how it can be carried into effect is hereinafter particularly described with reference to the accompanying drawings, in which:—

Figure 1 is a schematic showing of a magnetic disk storage assembly in position to be initialized by servo writer; and

Figures 2A and 2B, when assembled as shown in Figure 2, show a block diagram of the servo writing system in the method according to the invention.

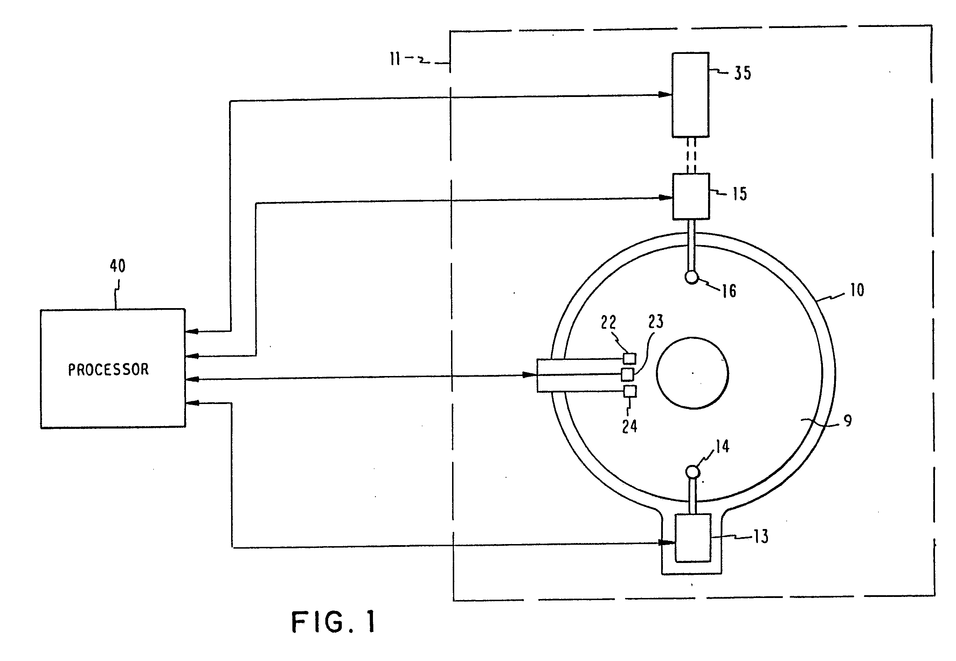

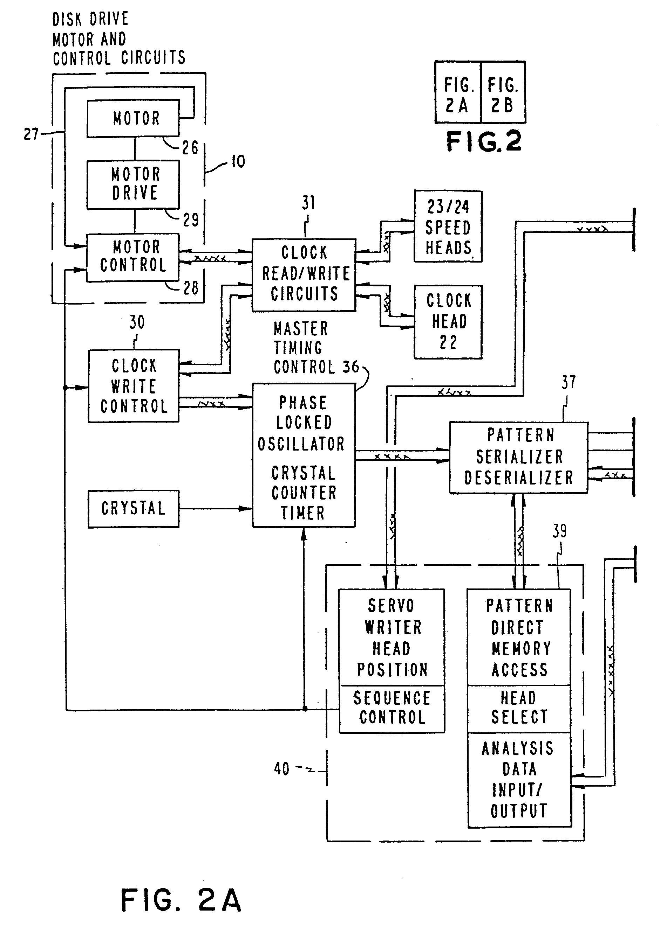

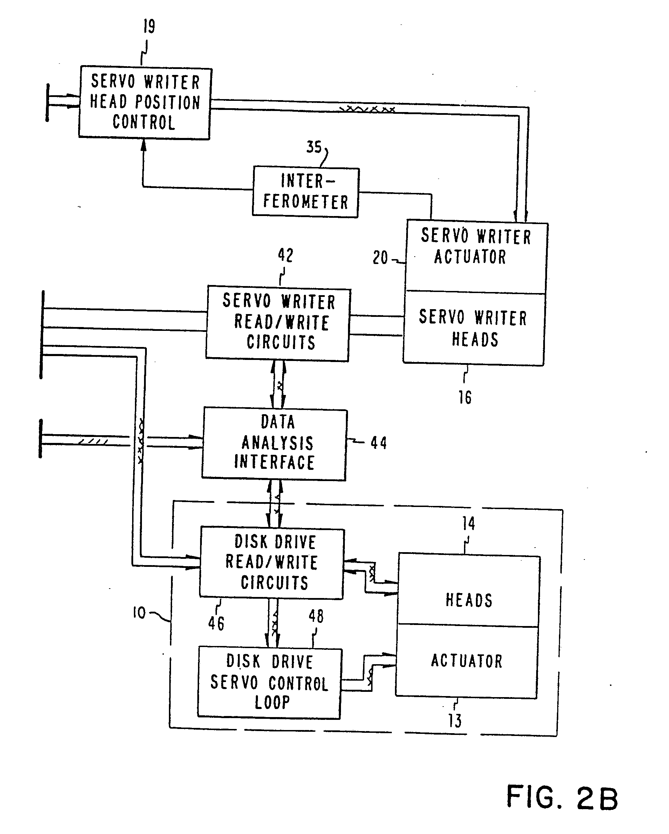

A magnetic disk storage assembly 10 (Figure 1) comprises a plurality of disks 9 mounted for rotation about a fixed axis, transducer heads 14 to co-operate with the disk surfaces and a common actuator 13 for the heads. The disks 9 of the assembly 10 are to be initialized by writing servo tracks on the disks. The assembly 10 is mounted on the base 11 of a servo writer assembly with the actuator 13 positioning the heads 14 at the outer crash stop. The servo writer assembly includes a precision head accessing mechanism 15 to cause servo writer heads 16 to access the disk surfaces along precisely aligned radial tracks. Although neither the tracks of the product heads 14 nor the tracks of the precision servo writer heads 16 are exactly radial, the product head tracks can be misaligned by as much as a few degrees whereas the precision servo writer head accessing mechanism 15 radially aligns the servo writer heads along tracks within a few minutes of the exact radial track. The servo writer heads 16 are positioned by the accessing mechanism 15 which includes a servo writer head position control 19 (Figure 2) and an actuator 20, at the expected outer crash stop position. The servo writer assembly has fixed heads, including clock head 22 (Figure 1) and speed heads 23 and 24, which are positioned over the disk surface at the clock head band which is radially inward of the disk area accessible by the product heads 14.

The disk storage assembly 10 includes a drive motor 26 (Figure 2), which is energized and driven to a nominal angular velocity by motor control circuit 28 and motor drive 29, the speed being regulated by a signal on line 27 originating from a sensor or shaft encoder. With the motor 26 at nominal angular velocity, a clock write control 30 intiates through clock read/write circuits 31 the writing of a single clock track by the clock head 22, and the output of this track is used to develop an index. Using this index, the speed head 23 starts to write continuously and the other speed head 24, being aligned to the same track position, starts to read. Any error between the two speed heads is used as a reference to the motor control to correct the angular velocity to an exact angular velocity to produce the required number of transitions on the clock track and to provide the clock reference with a closure error of no more than 10 nanoseconds. Such a clock track typically records clock pulse trend transitions with a density of in excess of 1,000 clock pulses per degree of rotation. When the angular velocity has been corrected, a clock track is written by the clock heads 22 and velocity control is returned to the nominal. Thereafter, the clock generator is referenced to the clock head and all timing is derived from the clock head.

Next a single data track is written under each product head 14 at the outer crash stop position. The product heads 14 are moved by the actuator 13 to the inner crash stop position and another data track is written under each product head 14. The servo writer heads 16 are then positioned over each track and measurements made to indicate the position of each track written relative to the servo writer head in time (angular position) and space (radial position). A laser interferometer 35 is used to ascertain the precise radial position of the inner and outer tracks written by each product head in terms of increments of movement of the actuator 20. The angular position is determined by using a counter to develop the deviation of each product head with respect to the expected radial position. These values are stored for each product head in a large memory in a processor 40, and intervening values for each head are derived to determine where each servo track should be written and at what phase relationship.

The stored radial values for each disk in turn are used to control the servo writer actuator to position the relevant servo writer head 16. The servo tracks are displaced from the data tracks by one half track pitch so that the junction between two adjacent servo tracks is aligned with the centre of a data track. After radial positioning of a servowriter head 16 in this way, a pattern of sector servo information is recorded whose timing is adjusted in accordance with any angular deviation derived from the relevant stored angular values. The servowriter head 16 is positioned in turn to write all the servo tracks for one disk. Thereafter the servo tracks for the other disks are written sequentially, using the particular stored values for positioning the appropriate servowriter head 16.

This produces in each servo track a pattern which when read by the product head 14 associated with the disk on which the servo track is written, will appear to have been written by that product head in position, both angular (time) and radial (spatial) although they have been written by a standard head 16 under precisely controlled conditions.

By following the initialization sequence with each product head of the disk drive, all become aligned over the corresponding track or cylinder simultaneously to permit the accessing of any such track by electrically switching between product transducer heads 14 without a time delay imposed by physical movement of the product actuator 13.

A master timing control 35 including a phase locked oscillator provides timing information which identifies the index position, sectors, bytes, bits and half bits. A pattern serializer/deserializer 37 accesses pattern direct memory access 39 of the processor 40 to provide a stream of serial bit information to servo writer read/write circuits 42 and thence the servo writer heads 16 for recording on the disk surface. The processor 40 also positions and sequences the servo writer heads, selects the head which is to be activated and provides analysis data derived from data analysis interface circuitry 44. Information from the pattern serializer/deserializer 37 is also directed to product read/write circuits 46 in the assembly 10 to provide control information to product servo control loop 48 and thereby to the product actuator 13 for positioning product heads 14. Data read by the product heads 14 and data to be written by the product heads is communicated between pattern serializer/deserializer 37 and the product read/write circuits 46.

It will be appreciated that the initial data track writing by the product heads need not be at the outer and inner crash stop positions, but may be at predetermined non-adjacent spaced data track positions. In this case successive servo track positions are determined by using not only derived intervening deviation values but also derived interpolated deviation values, as necessary. The described method however is preferred.

It will be understood that the intialization of a disk storage assembly with sector servo information involves several complex operations including placement, file control (motor) and clock writing, offset measurement, surface quality measurement, head and amplifier measurement and track writing testing and qualification.

## Claims

1. A method of initializing sector servo information on the disks (9) of a magnetic disk storage assembly (10) having product transducer heads (14) positioniable by an actuator (13), characterised by the steps of using the product transducer heads (14) to write first and second non-adjacent tracks on the surfaces of the disks, measuring the radial position and circumferential timing of the impulses written relative to the position and timing of corresponding servo writer transducer heads (16) of a precision servo track writer device (15, 19, 20), positioned over the first and second data track, determining deviations between expected and actual positions for each product transducer head (14) and storing these values in a memory, using these stored values for determining the radial position and circumferential timing for each pattern of servo information track to be written, successively writing the initializing sector servo information on the disks (9) to form equally spaced tracks starting by radially offsetting the corresponding servo writer transducer head (16) by half a track pitch, and circumferentially adjusting the write start timing, whereby the placement of the servo information is adjusted to the position and path of travel of the associated product transducer head (14).

2. A method according to claim 1, in which the step of writing first and second non-adjacent tracks on the disks, comprises the writing of the innermost and outermost tracks of the data tracks associated with the transducer heads.

3. A method according to claim 1 or 2, including a further initial step of applying a clock track to one disk surface using a clock head (22, 23, 24) which writes evenly spaced transitions along such clock track except for an index position and thereafter reads such clock track to provide circumferential position and timing information.

4. A method according to claim 1, 2 or 3, in which the step of determining the radial position and circumferential timing comprises identification of the non-adjacent track radial positions, determination of the track pitch within the data band and positioning the servo writer transducer head at half track displacements from data track positions.

## Revendications

1. Un procédé d'initialisation d'une servo-information par secteur sur les disques (9) d'un ensemble mémoire à disques magnétiques (10) ayant des têtes transductrices ordinaires (14) pouvant être positionnées par un actionneur (13), caractérisé par les phases consistant à utiliser les têtes transductrices ordinaires (14) pour écrire une première et une deuxième pistes non adjacents sur les surfaces de disques, à mesurer la position radiale et le minutage circonférentiel des impulsions écrites par rapport à la position et au minutage des têtes transducteurs servo-inscriptrices (16) correspondantes d'un dispositif servo-inscripteur de pistes de précision (15, 19, 20), positionné au dessus de la première et de la deuxième pistes de données, à déterminer les déviations entre les positions attendues et réelles pour chaque tête transductrice ordinaire (14) et à emmagasiner ces valeurs dans une mémoire, à utiliser lesdites valeurs emmagasinées pour déterminer la position radiale et le minutage circonférential pour chaque motif de piste de servo-information à écrire, à écrire ensuite la servo-information de secteur d'initialisation sur les disques (9) pour former les pistes uniformement espacées, en partant en décalant radialement la tête transductrice servo-inscriptrice correspondante (16) d'un demi pas de piste et en ajustant circonférentiellement le minutage du démarrage de l'écriture, de sorte que le placement de la servo-information est adjustée sur la position et sur la trajectoire de la tête transductrice ordinaire (14) associée.

2. Un procédé selon la revendication 1, et dans lequel le phase d'inscription des première et deuxième pistes non adjacentes sur les disques consiste à écrire les pistes extrêmes intérieures et extrêmes extérieures des pistes de données associées aux têtes transductrices.

3. Un procédé selon la revendication 1 et 2, comprenant une autre phase initiale consistant à appliquer une piste d'horloge sur une surface de disque en utilisant une tête d'horloge (22, 23, 24) qui écrit des transitions uniformément espacées le long de cette piste d'horloge, sauf dans une position inverse, et ensuite, lit cette piste d'horloge pour fournir une information de position circonférentielle et de minutage.

4. Un procédé selon la revendication 1, 2 ou 3, dans lequel la phase de détermination de la position radiale et du minutage circonférentiel comprend l'identification des positions radiales des pistes non adjacentes, la détermination du pas de pistes dans la bande de données et la position de la tête transductrice du servo-intruc- teur à des déplacements de demi piste à partir des positions de pistes de données.

## Patentansprüche

1. Verfahren zur Initialisierung von Sektorservoinformation auf den Platten (9) einer Magnetplattenspeicheranordnung (10), welche durch einen Steller (13) positionierbare Produkt-Wandlerköpfe (14) aufweist, gekennzeichnet durch die Verfahrensschritte einer Verwendung der Produkt-Wandlerköpfe (14) zum Beschreiben einer ersten und einer an diese nicht angrenzenden zweiten Spur auf den Oberflächen der Platten, einer Messung der radialen Position und umfänglichen Zeitlage der geschriebenen Impulse in Bezug auf die Position und Zeitlage entsprechender Servoschreib-Wandlerköpfe (16) einer Präzisionsservospurschreibvorrichtung (15, 19, 20), die über der ersten und der zweiten Datenspur angeordnet sind, einer Bestimmung von Abweichungen zwischen erwarteten und tatsächlichen Positionen für jeden Produkt-Wandlerkopf (14) und einer Speicherung dieser Werte in einem Speicher, einer Verwendung dieser gespeicherten Werte zur Bestimmung der radialen Position und umfänglichen Zeitlange für jedes zu schreibende Muster von Servoinformationsspur, ein aufeinanderfolgendes Einschreiben der Initialisierungs-Sektorservoinformation auf die Platten (9) zur Ausbildung von in gleichem Abstand liegenden Spuren beginnend mit einer radialen Versetzung des entsprechenden Servoschreib-Wandlerkopfs (16) um einen halben Spurabstand und durch umfängliche Einjustierung der Schreibbeginnzeitlage, wodurch die Anbringung der Servoinformation auf die Position und Bahn des zugehörigen Produkt-Wandlerkopfs (14) eingerichtet wird.

2. Verfahren nach Anspruch 1, bei welchem der Verfahrensschritt des Beschreibens der ersten und der daran nicht angrenzenden zweiten Spur auf den Platten das Beschreiben der innersten und der äußersten Spur der den Wandlerköpfen zugeordneten Datenspuren umfaßt.

3. Verfahren nach Anspruch 1 oder 2, welches ferner einen Anfangsschritt einer Anbringung einer Taktspur auf einer der Plattenoberflächen unter Verwendung eines Taktkopfes (22, 23, 24) enthält, welcher in gleichem Abstand liegende Übergänge längs einer solchen Taktspur, ausgenommen eine Indexposition, schreibt und danach eine solche Taktspur zur Lieferung von Umfangsposition- und Zeitlageinformation liest.

4. Verfahren nach Anspruch 1, 2 oder 3, bei welchem der Verfahrensschritt einer Bestimmung der radialen Position und umfänglichen Zeitlage die Identifikation der radialen Positionen der nicht-aneinandergrenzenden Spuren, die Bestimmung des Spurabstandes innerhalb

9      0 042 931      10

des Datenbandes und die Positionierung des Servoschreib-Wandlerkopfes mit Halbspurversetzungen gegenüber den Datenspurpositionen umfaßt.

FIG. 1

0 042 931

O 042 931

DISK DRIVE
MOTOR AND
CONTROL CIRCUITS

| FIG. 2A | FIG. 2B |

**FIG.2**

MOTOR — 26
— 27

MOTOR DRIVE — 10
— 29

MOTOR CONTROL — 28

31

CLOCK READ/WRITE CIRCUITS

23/24 SPEED HEADS

CLOCK HEAD 22

MASTER TIMING CONTROL 36

30

CLOCK WRITE CONTROL

PHASE LOCKED OSCILLATOR

CRYSTAL COUNTER TIMER

CRYSTAL

37

PATTERN SERIALIZER DESERIALIZER

39

SERVO WRITER HEAD POSITION

SEQUENCE CONTROL

PATTERN DIRECT MEMORY ACCESS

HEAD SELECT

ANALYSIS DATA INPUT/ OUTPUT

40 —

**FIG. 2A**

2

FIG. 2B